# EUROPEAN PATENT APPLICATION

(11) **EP 4 667 303 A1**
(43) Date of publication of application: **24.12.2025**
(21) Application number: 25180626.1
(22) Date of filing: 04.06.2025
(51) Int. Cl.: B60T 7/04, B60T 7/08, B60T 8/171, B60T 8/88, B60T 13/66, B60T 13/74, B60T 17/22

(54) **REDUNDANT BRAKE SYSTEM FOR DYNAMIC DECELERATION AND ROPP FUNCTION**

(30) Priority: 18.06.2024 US 202463661518 P; 07.02.2025 CN 202510136061
(71) Applicant: BWI (Shanghai) Co., Ltd., Shanghai 200131 (CN)
(72) Inventor: KUMAR, Abhishek, 95700 167 Rue de la Belle Etoile, Roissy-en-France (FR); ZAMPARINI, Yuan, 95700 167 Rue de la Belle Etoile, Roissy-en-France (FR)
(74) Representative: Lukaszyk, Szymon

(57) **Abstract**

An electro-hydraulic brake system including one or more friction brakes, a first electronic parking brake, a second electronic parking brake, a primary controller, and a secondary controller. The one or more friction brakes are configured to brake one or more wheels of the vehicle and the primary controller is in communication with the one or more friction brakes. The secondary controller in communication with the first electronic parking brake and the second electronic parking brake. The secondary controller being configured to, responsive to the primary controller malfunctioning and dynamic movement of the one or more wheels of the vehicle, command at least one of the first electronic parking brake and the second electronic parking brake to dynamically brake the one or more wheels.

## Description

### Technical Field

The present disclosure relates to brake systems, particularly electro-hydraulic brake systems configured for use in autonomous and semi-autonomous vehicles.

### Background of the Invention

Certain vehicles may include a Brake-by-Wire (BBW) architecture to brake the vehicle whether during deceleration (e.g., by friction brakes) or when the vehicle is stationary (e.g., parked) by a parking brake. BBW architectures may include a brake boost unit (MCU) for deceleration braking events. Moreover, vehicles may be required to have redundant park brakes, such as a park pawl and an electronic parking brake (EPB). Vehicles equipped with advanced driver assistance systems (ADAS) may or may not require redundant brake functions for deceleration and redundant immobilization possibility.

### Summary of the invention

The present disclosure provides an electro-hydraulic brake system for use in a vehicle. The electro-hydraulic brake system may include one or more friction brakes, preferably two frictions brakes a first electronic parking brake, a second electronic parking brake, a primary controller, and a secondary controller. The one or more friction brakes may be configured to brake one or more wheels of the vehicle. The primary controller may be in communication with the one or more friction brakes and one or both parking brakes. The secondary controller may be in communication with the first electronic parking brake and the second electronic parking brake. The secondary controller may be configured to be responsive to the primary controller malfunctioning.

According to another aspect of this disclosure, an electro-hydraulic brake system for use in a vehicle is provided. The electro-hydraulic brake system may include one or more friction brakes, a boost unit, a first electronic parking brake, a second electronic parking brake, a primary controller, and a secondary controller. The one or more friction brakes may be configured to brake one or more wheels of the vehicle. The boost unit may be configured to supply a desired brake pressure to one or more friction brakes and the primary controller may be in communication with the boost unit. The secondary controller may be in communication with the first electronic parking brake and the second electronic parking brake. The secondary controller may be configured to, responsive to the boost unit failing to provide the desired brake pressure and dynamic movement of the one or more wheels of the vehicle, command at least one of the first electronic park brake and the second electronic park brake to dynamically brake the one or more wheels.

According to another aspect of this disclosure, an electro-hydraulic brake system for use in a vehicle is provided. The electro-hydraulic brake system may include a primary controller and a secondary controller. The primary controller may be configured to operate one or more friction brakes of the vehicle. The secondary controller may be configured to operate one or more electronic parking brakes. The primary controller may be further configured to, responsive to a speed of the vehicle being less than a speed threshold and at least one of: (i) the secondary controller malfunctioning and (ii) an electronic parking brake line malfunctioning, operate the one or more electronic parking brakes.

According to another aspect of the invention is the removal of the traditional part pawl reducing the overall cost of the system, known as ROPP, removal of park pawl.

According to another aspect of the invention Fail Operational Dynamic Deceleration in Onebox possibility reduces the overall cost of the brake system with such a configuration.

### Brief description of the drawings

FIG. 1 illustrates a schematic diagram of a brake system for a vehicle according to one or more embodiments.
FIG. 2 illustrates a schematic diagram an exemplary brake system controller according to one or more embodiments.
FIG. 3 illustrates another schematic diagram an exemplary brake system controller according to one or more embodiments.
FIGS. 4A and 4B illustrate exemplary processes performed by the brake system controller when the vehicle is at a stand-still or moving below a speed threshold.
FIG. 5 illustrates an exemplary process performed by the brake system controller while the vehicle is dynamically moving and when one or more microcontrollers are malfunctioning.
FIG. 6 illustrates an exemplary process performed by the brake system controller while the vehicle is dynamically moving and when vehicle brake pedal is malfunctioning or alternative input.
FIG. 7 illustrates an exemplary process performed by the brake system controller while the vehicle is dynamically moving and when one or both hydraulic circuits are in failure.

### Detailed Description

Embodiments of the present disclosure are described herein. It is to be understood, however, that the disclosed embodiments are merely examples and other embodiments can take various and alternative forms. The figures are not necessarily to scale; some features could be exaggerated or minimized to show details of particular components. Therefore, specific structural and functional details disclosed herein are not to be interpreted as limiting, but merely as a representative basis for teaching one skilled in the art to variously employ the embodiments. As those of ordinary skill in the art will understand, various features illustrated and described with reference to any one of the figures can be combined with features illustrated in one or more other figures to produce embodiments that are not explicitly illustrated or described. The combinations of features illustrated provide representative embodiments for typical applications. Various combinations and modifications of the features consistent with the teachings of this disclosure, however, could be desired for particular applications or implementations.

This invention is not limited to the specific embodiments and methods described below, as specific components and/or conditions may, of course, vary. Furthermore, the terminology used herein is used only for the purpose of describing particular embodiments of the present invention and is not intended to be limiting in any way.

As used in the specification and the appended claims, the singular form "a," "an," and "the" comprise plural referents unless the context clearly indicates otherwise. For example, reference to a component in the singular is intended to comprise a plurality of components.

The term "substantially" or "about" may be used herein to describe disclosed or claimed embodiments. The term "substantially" or "about" may modify a value or relative characteristic disclosed or claimed in the present disclosure. In such instances, "substantially" or "about" may signify that the value or relative characteristic it modifies is within ± 0%, 0.1%, 0.5%, 1%, 2%, 3%, 4%, 5% or 10% of the value or relative characteristic.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). The term "and/or" includes any and all combinations of one or more of the associated listed items.

Although the terms first, second, third, etc. may be used to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

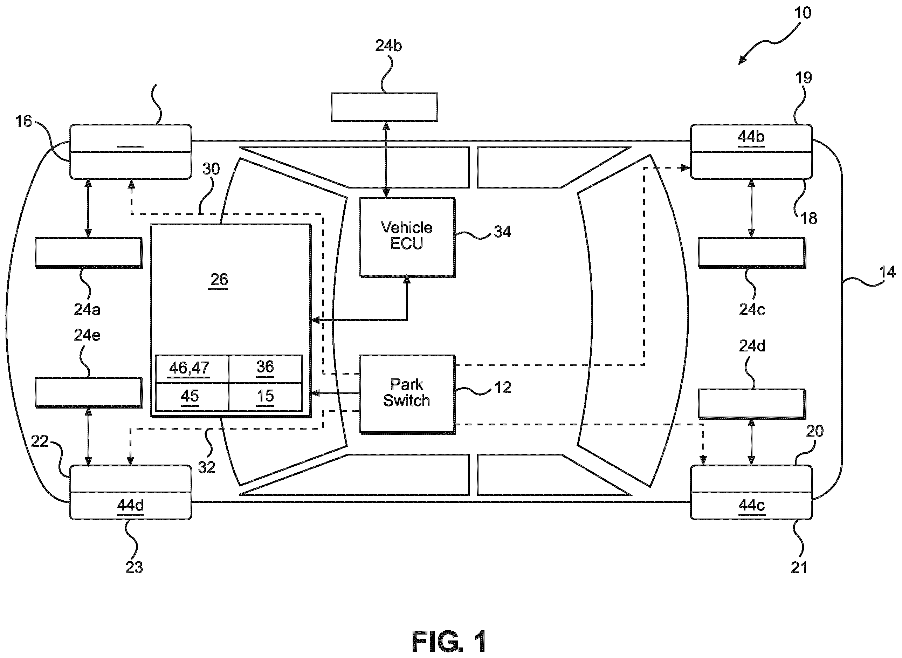

As shown in FIG. 1, one aspect of a brake system, generally designated 10, that may include an electric park brake switch 12, a brake pedal 36, a brake pedal travel sensor 15, a master cylinder 45, a pedal feel emulator 46, four brake modules 16 (i.e., right-front), 18 (i.e., right-rear), 20 (i.e., left-rear), 22 (i.e., left-front), a communication bus 24a, 24b, 24c, 24d, 24e, 24f (collectively, 24), a brake system controller 26. The system 10 may be embodied on a vehicle 14, such as a passenger car, a truck or the like, having wheels 17, 19, 21, 23. As described herein, the system 10 may be configured to provide boosted service braking, park braking, dynamic park braking, redundant dynamic braking and redundant static braking or park-pawl function (RoPP) and non-boosted service braking. RoPP may be advantageous as removal of a parking pawl or parking lock, eliminates the cost and complexity of incorporating a parking pawl or parking lock within the vehicle.

The pedal feel emulator 46 may be any device capable of receiving a user input (e.g., a braking command) and communicating the user input to one or more of the brake modules 16, 18, 20, 22 via the brake system controller 26 over the communication bus 24. In one aspect, the pedal feel emulator 46 may resemble a traditional brake pedal and may provide a user with the feel of a traditional hydraulic brake pedal (e.g., non-linear pedal travel versus pedal force) in response to the user's brake command. In another aspect, the pedal feel emulator 46 may include a brake pedal 36 (e.g., a cantilevered brake pedal) and one or more sensors (e.g., force sensors, and/or pressure sensors, and/or displacement sensors) connected to the brake pedal 36. The sensors may be adapted to monitor the request applied to the brake pedal by the user. As an example, the sensors may include a brake pedal travel sensor and/or or a brake pedal pressure sensor 15. However, those skilled in the art will appreciate that any device capable of receiving and/or communicating a user's brake command may be employed as the pedal feel emulator 46.

The brake modules 16, 18, 20, 22 may be any brake units capable of receiving an electronic or other brake-by-wire braking command and generating a braking force in response thereto. For example, the friction brakes 96 of one or more of the brake modules 16, 18, 20, 22 may be an electric caliper, which may include an electric motor adapted to drive a piston/caliper or other mechanical component into engagement with brake pads to clamp a rotor positioned between the brake pads. Alternatively, one or more of the friction brakes 96 of the brake modules 16, 18, 20, 22 may be an electro-hydraulic brake unit, wherein an electric motor may be used to pressurize hydraulic fluid, which in turn actuates brakes unit to supply a braking force.

The communication channels 24 may be any communication link capable of providing a communication link between the various nominal braking components (e.g., the pedal feel emulator 46, the brake modules 16, 18, 20, 22 and the vehicle ECU 34) of the system 10. For example, the communication bus 24 may be a time-triggered communication channel, such as for example a FLEXRAY^{®} bus, a TTP/C bus or the like, for providing high baudrate communication and tight synchronization of the components of the system 10. However, those skilled in the art will appreciate that the communication bus 24 may be replaced with and, therefore, is intended to include any communication means, such as hard-wired communication lines, wireless communications lines or the like, wherein "hard-wired communication lines" is intended to broadly include wired communication buses, hard-wired signals and the like.

The vehicle ECU 34 may be in communication with the brake system controller 26. The brake system controller 26 may be a "one box" configuration that may include a master cylinder 45, the pedal feel emulator 46, the brake pedal pressure sensor 47, the brake pedal travel sensor 15, and a brake system ECU 84. The brake system ECU 84 may be configured to communicate with the brake modules 16, 18, 20, 22 over the communication bus 24. In one aspect, the brake system ECU 84 of the brake system controller 26 may be adapted to receive user braking commands from the pedal feel emulator 46 and/or various other inputs from sensors and/or other electronic control units on the vehicle 14 and may facilitate various high-level functions, for example, AD and ADAS functions, anti-lock braking, traction control, and vehicle stability enhancement. For example, the brake system ECU 84 may generate and/or communicate a braking command to one or more of the brake modules 16, 18, 20, 22 based upon a user input signal received from the pedal feel emulator 46 and wheel speed sensors (not shown) located at each corner of the vehicle 14.

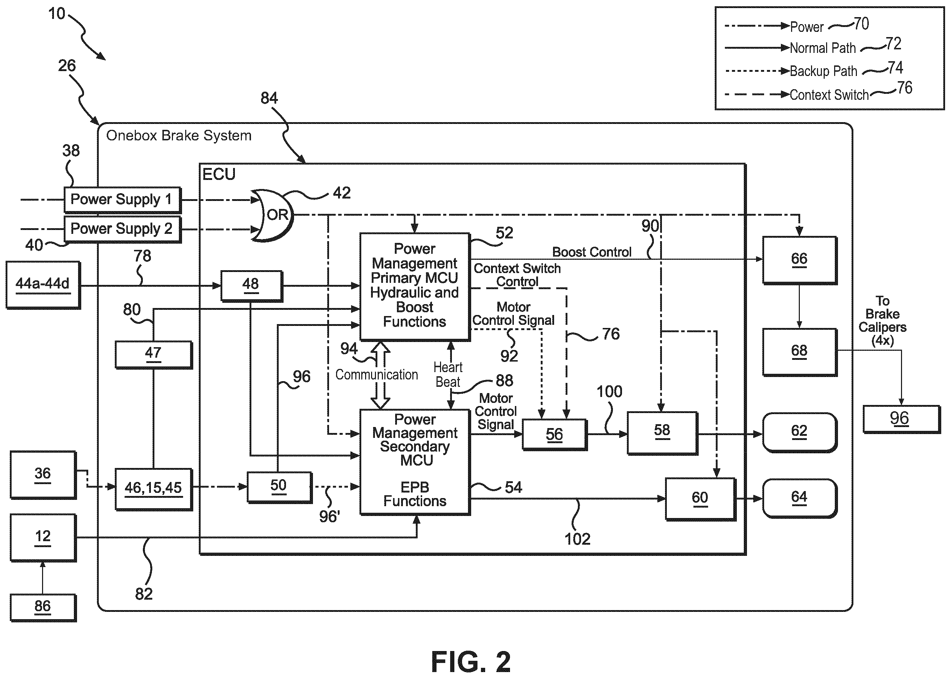

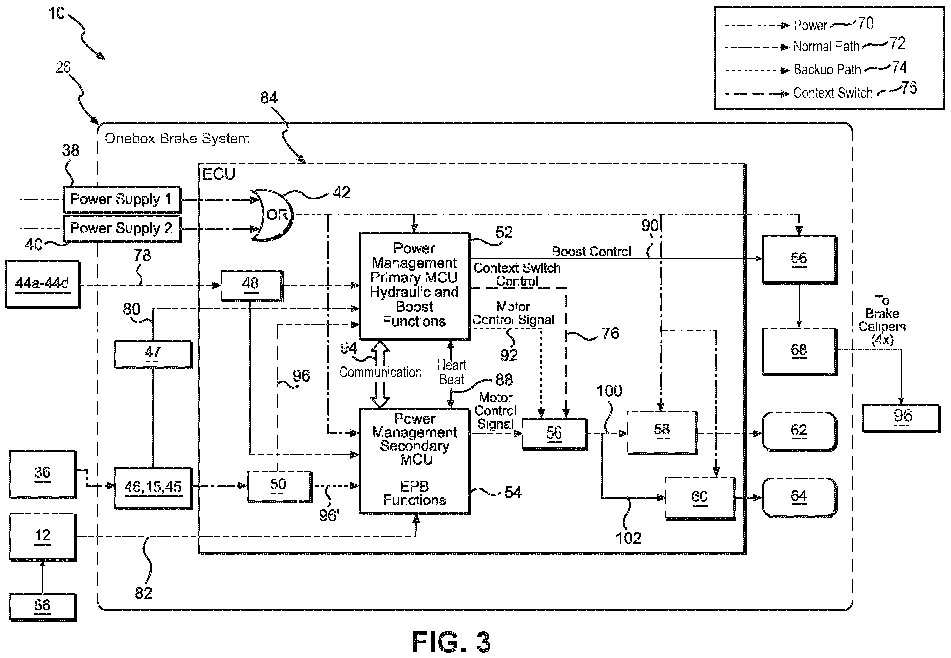

As shown in FIG. 1, the electric park brake switch 12 may be connected to the right-front brake module 16 by communication line 30 and the left-front brake module 22 by communication line 32. As will be shown in FIGS. 2 and 3, the electric park brake switch 12 may be in communication with one or more components of the electronic brake system controller 26 (e.g., a secondary micro-controller 54). Communication lines 30, 32 may be hard-wired communications lines, wireless communications lines or the like.

The brake modules 16, 18, 20, 22 may include a friction brake 96 (indicated by reference number 96 in FIGS. 2 and 3) and one or more electronic parking brakes 62, 64 (FIGS. 2 and 3). The electric park brake switch 12 may be any switch or device capable of communicating a park brake command to one or more of the brake modules 16, 18, 20, 22. Each of the wheels 17, 19, 21, 23 or the brake modules 16, 18, 20, 22 may include a wheel speed sensor 44a, 44b, 44c, 44d that may be configured to detect or measure rotational speed of the wheels 17, 19, 21, 23 and the rotational speed of the wheels 17, 19, 21, 23 may be indicative of whether the vehicle is in a dynamic state (may or may not be used for other braking and stability functions) such as moving at or above a predetermined threshold (e.g., >3-5 mph) or in a static state (e.g., <3-5 mph).

FIG. 2 illustrates a schematic diagram of the brake system controller 26 within the vehicle brake system 10 and FIG. 3 illustrates a schematic diagram of another brake system controller 26 within the vehicle brake system 10. As will be described in detail below, the components of the brake system controller 26, are substantially similar and common reference numbers for those substantially similar or identical components are used herein. Accordingly, for brevity unless noted otherwise, descriptions of the components made with reference to FIG. 2 apply to those same components in FIG. 3.

The brake system controller 26 may include the brake system ECU 84 that may be in communication with one or more inputs and one or more outputs to operate the vehicle brake system 10. Electric power may be provided from a first power supply 38 and a second power supply 40 to a logic gate 42. The logic gate 42 may be an "OR" logic gate configured to receive power from the first and second power supplies 38, 40 and provide power 70 from either the first power supply 38 or the second power supply 40 to enable a redundant supply of power to the components of the brake system controller 26. In other words, if either of the first power supply 38 and the second power supply 40 fails to provide power, the logic gate 42 is configured to supply power 70 from the other power supply 38, 40.

The ECU 84 may include a primary micro-controller (MCU) 52 and a secondary MCU 54 that are in communication with one another by a periodic signal generated by hardware or software to indicate normal operation or to synchronize the primary and secondary MCUs 52, 54, by a heartbeat 88. The primary and secondary MCUs 52, 54 may also be configured to communicate with one another via a communication line 94. As an example, under normal operating conditions (e.g., when the brake system 10 functions as intended) the primary MCU 52 may be configured to operate one or more of the friction brakes 96 of the brake modules 16, 18, 20, 22, and the secondary MCU 54 may be configured to operate the first electronic parking brake (EPB) 62 and the second EPB 64.

The wheel speed sensors 44a, 44b, 44c, 44d may be configured to supply wheel speeds of each of the wheels 17, 19, 21, 23 to the primary MCU 52 and the secondary MCU 54 via a first adaptation and signal copy filter or circuit 48 that may be configured to process (e.g., filter wheel speed signals 78) from the wheels speed sensors 44a, 44b, 44c, 44d to the primary MCU 52 and the secondary MCU 54. A second adaptation and signal copy filter or circuit 50 may be in communication with the brake pedal travel sensor 15, the master cylinder 45, and the pedal feel emulator 46. Driver input applied to the brake pedal 36 (e.g., as a driver actuates the brake pedal 36) displacement or travel distance of the brake pedal 36 may be communicated to the second adaptation and signal copy filter or circuit 50, and the second adaptation and signal copy filter 50, under normal circumstances, may communicate the brake pedal travel sensor signals 95 to the primary MCU 52. Under certain circumstances, such as when one or more of the first and second EPBs 62, 64 are required for dynamic braking (e.g., due to the primary MCU 52 malfunctioning), backup brake pedal travel sensor signals 95' may be provided to the secondary MCU 54.

The electric park brake switch 12 may be in communication with a park brake actuation device, such as a park brake button 86 that may be actuated by the driver. The driver may actuate the park button 86 when the vehicle is at a standstill (e.g., static state) or when the vehicle is dynamically moving and the friction brakes are unable to provide sufficient dynamic braking. The electric park brake switch 12 may be in direct communication through nominal path 82 with the secondary MCU 54. Under normal conditions (e.g., when the system 10 functions as intended), the secondary MCU 54 may provide a first motor control signal 100 and a second motor control signal 102 to the first EPB 62 and the second EPB 64, respectively. The first EPB 62 may be in communication with a first motor driver and H-bridge 58 and the second EPB 64 may be in communication with a second motor driver and H-bridge 60, and the first and second motor drivers and H-bridges 58, 60 may receive the first and second motor control signals 100, 102 to actuate the first and second EPBs 62, 64 accordingly.

As stated above, the primary MCU 52 may be configured to operate the friction brakes 96 under normal conditions. A hydraulic boost unit 66 and a pressure modulation unit 68 may be disposed between the friction brakes 96 and the primary MCU 52. The hydraulic boost unit 66 may be configured to amplify or augment force applied to the brake pedal 36, so that the amount of force that the driver applies to the pedal 36 for stopping or slowing the vehicle is significantly reduced. The pressure modulation unit 68 may be configured to modulate the pressure supplied to the brakes 96 to modulate brake application and prevent locking of the brakes as part of an anti-lock brake function and/or stability functions.

The ECU 84 may include a context switch that may be configured to enable redundant dynamic braking and redundant static braking without the use of a park pawl or park lock. The context switch 56 may be configured to receive a context switch control signal 76 from the primary MCU 52 to switch control of one or more of the first and second EPBs 62, 64 and the friction brakes 96 between the primary MCU 52 and the secondary MCU 54, as required. As shown in FIG. 2, the context switch 56 may be configured to provide the motor control signal 100 to the first motor driver and H-bridge 58 to operate the first EPB 62 in response to the context switch 56 receiving the backup motor control signal 92.

The backup motor control signal 92 may be triggered when the secondary MCU 54 is unable to operate the first EPB 62 (e.g., when the secondary MCU 54 malfunctions). The communication line 94, heartbeat 88, or both may communicate the status of the secondary MCU 54 to indicate that the secondary MCU 54 is malfunctioning. As shown in FIG. 3, the context switch 56 may be configured to provide the first EPB motor control signal 100 and the second EPB motor control signal 102 to the first motor driver and H-bridge 58 and the second motor driver and H-bridge 60, respectively, to operate the first EPB 62 and the second EPB 64 in response to the secondary MCU 54 malfunctioning.

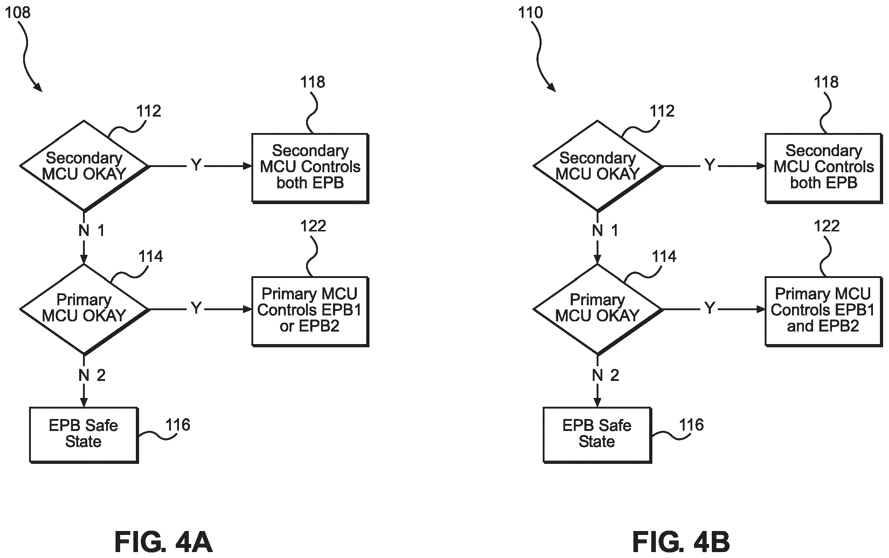

FIG. 4A illustrates a redundant parking brake process 108 according to one embodiment and FIG. 4B illustrates another redundant parking brake process 110 according to another embodiment. In operation 112, the secondary MCU 54 may communicate whether the secondary MCU 54 is operating properly or as intended to the context switch 56, the primary MCU 52, or both,. If the secondary MCU 54 is functioning properly, the secondary MCU 54 controls both EPBs 62, 64, as represented by operation 118. If the secondary MCU 54 is not operating properly, a single point malfunction may occur (as represented by "1") and the process may branch to operation 114 in which it is determined that the primary MCU 52 is operating properly.

If the secondary MCU 54 is malfunctioning and the primary MCU 52 is operating as intended, the primary MCU 52 controls one of the first and second EPBs 62, 64 (as shown in FIG. 2). The primary MCU 52 may be configured to receive driver input signals from one or more brake sensors (e.g., the pedal travel sensor 15, brake pressure sensor 47) to enable dynamic braking based on the driver input. The primary MCU 52 may also be configured to provide the backup motor control signal 92 to the context switch 56 to the first and second motor driver and H-bridges to operate at least one of the first and second EPBs 62, 64. If both of the primary MCU 52 and the secondary MCU 54 are each malfunctioning, a double point malfunction may occur (as represented by "2") and the process may branch to operation 116, in which the EPBs 62, 64 are placed in a safe state. In the safe state, the first and second EPBs 62, 64 may be automatically moved so that the wheels of the vehicle are locked and stationary. Referring specifically to FIG. 4B, if the secondary MCU 54 is malfunctioning and the primary MCU is functioning properly, as represented by operation 114, the process may branch to operation 122, in which the primary MCU 52 controls or operates the first and second EPBs 62, 64.

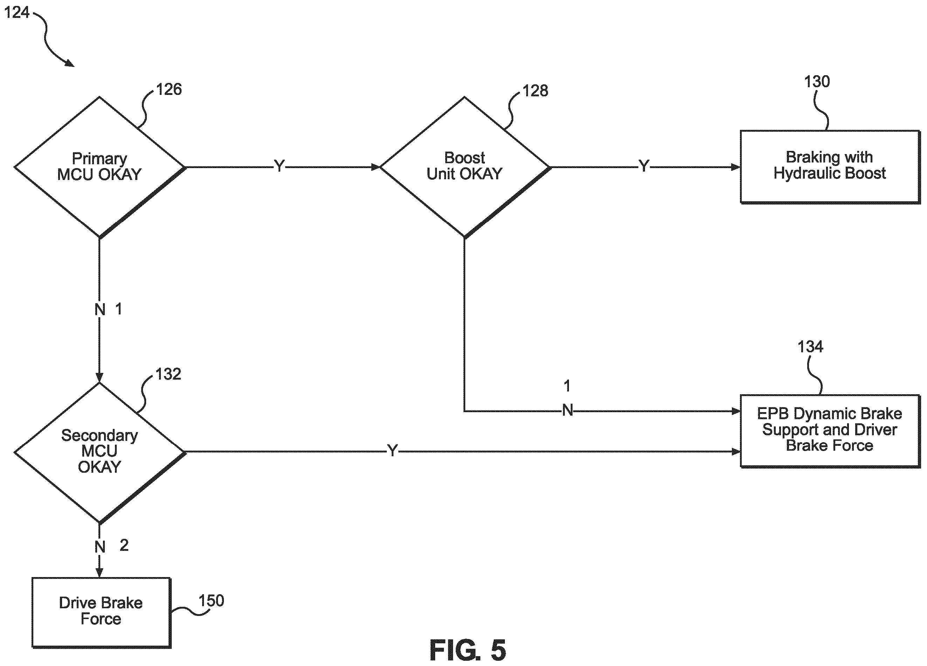

FIG. 5 illustrates an exemplary process 124 performed by the brake system controller 26, while the vehicle is dynamically moving and when the brake pedal is operating properly. In operation 126, the primary controller 52 may communicate whether the primary MCU 52 is operating properly or as intended to the context switch 56, the secondary MCU 54, or both. If yes, the process may branch to operation 128, in which the primary MCU 52 determines whether the boost unit 66 is functioning properly. If the boost unit 66 is deemed functioning as intended, the process may branch to operation 130, in which dynamic braking is performed by the friction brakes 96 with hydraulic boost. If the boost unit is malfunctioning, there may be a single point failure and the process may branch to operation 134, in which the first and second EPBs 62, 64 perform dynamic braking.

If in operation 126, the primary MCU 52 is not functioning properly, there may be a single point failure and the process may branch to operation 132, in which it is determined whether the secondary MCU 54 is malfunctioning. If the secondary MCU 54 is functioning as intended, the secondary MCU 54 may operate the first and second EPBs to provide dynamic braking in addition to braking by driver brake force. Driver brake force may refer to application of the friction brakes based on hydraulic actuation based on application of the brake pedal 36. If the secondary MCU 54 and the primary MCU 52 are each malfunctioning, dynamic braking may be performed by driver brake force as represented by operation 136.

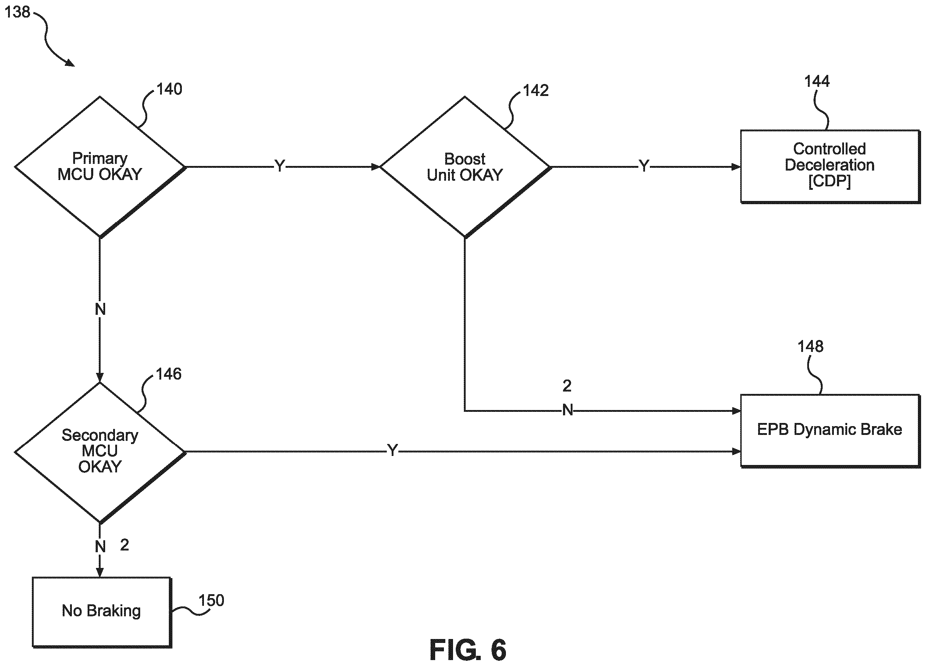

FIG. 6 illustrates an exemplary process 138 performed by the brake system controller 26 while the vehicle is dynamically moving and when the brake pedal is not operating properly (e.g., stuck). In this condition, the driver may actuate the parking brake button 86 to actuate the first and second EPBs 62, 64 to dynamically brake the vehicle 14. In operation 140, it may be determined whether the primary MCU 52 is operating properly, if the primary MCU 52 is functioning, the process branches to operation 142 in which it is determined whether the boost unit 66 is operating properly. If the brake pedal is not functioning and the primary MCU 52 and the boost unit 66 are each operating properly, the process may branch to operation 144, in which a controlled deceleration program is executed by hydraulic braking of the friction brakes 96.

If the boost unit 66 is not operating properly, there is a two point failure and the process branches to operation 148 in which one or both of the first and second EPBs 62, 64 perform dynamic braking of the vehicle 14. If the primary MCU 52 is not operating properly, the process may branch to operation 146 in which it is determined whether the secondary MCU 54 is functioning. If the secondary MCU 54 is malfunctioning no braking may be provided as represented by operation 150, and if the secondary MCU 54 is functioning, the process may branch to operation 148.

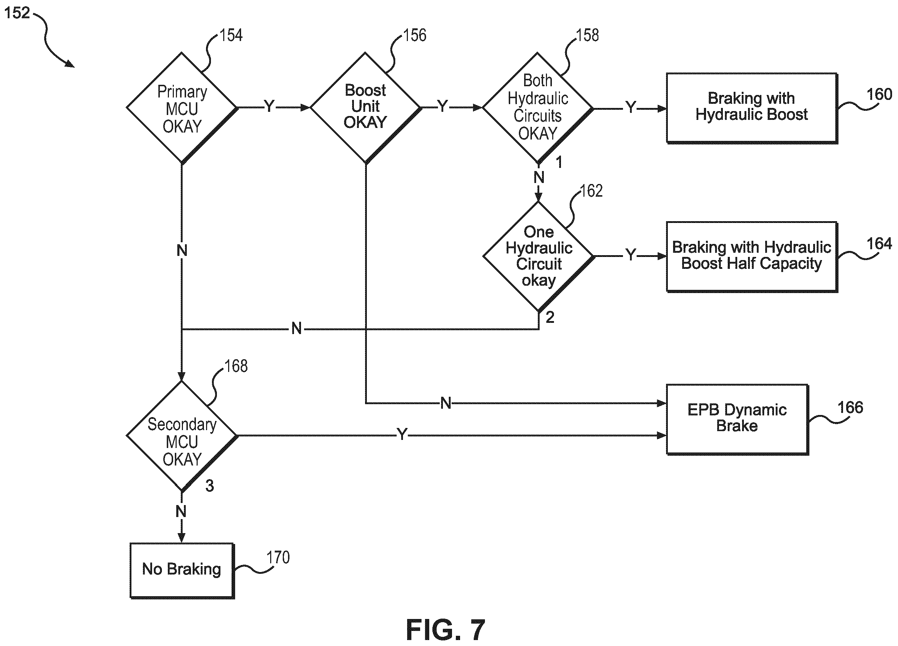

FIG. 7 illustrates an example process 152 performed by the brake system controller 26 while the vehicle is dynamically moving and when one or more hydraulic circuits of the brake system 10 are malfunctioning. In operation 154, it may be determined whether the primary MCU 52 is operating properly, if the primary MCU 52 is functioning, the process branches to operation 156 in which it is determined whether the boost unit 66 is operating properly. If the boost unit 66 is working properly, the primary MCU 52 or vehicle ECU 34 determines whether both hydraulic circuits are operating properly as represented by operation 158. If both hydraulic circuits are okay, the process may branch to operation 160, in which the friction brakes 96 are applied with hydraulic boost.

If both hydraulic circuits are not functioning properly, the process 152 may branch to operation 162, in which it is determined whether at least one hydraulic circuit is okay. If one hydraulic circuit is functioning properly, the process branches to operation 164 in which dynamic braking with hydraulic boost at less than full capacity (e.g., half capacity) is performed. As mentioned above, if the boost unit is not functioning properly, the process may branch from operation 156 to the operation 166 in which dynamic braking is performed by one or more of the electronic parking brakes 62, 64. If in operation 154, the primary MCU 52 is determined to not be functioning properly, the process branches to operation 168, in which the secondary MCU 54 is evaluated. If the primary MCU 52 and the secondary MCU 54 are both malfunctioning, there may be a three point failure (as represented by "3"), the process may branch from operation 168 to operation 170 in which no braking is available. If the primary MCU 52 is malfunctioning and the secondary MCU 54 is functioning properly, the process may branch to operation 166, in which the secondary MCU 54 operates one or more of the of the first and second EPBs 62, 64.

The processes, methods, or algorithms disclosed herein can be deliverable to/implemented by a processing device, controller, or computer, which can include any existing programmable electronic control unit or dedicated electronic control unit. Similarly, the processes, methods, or algorithms can be stored as data and instructions executable by a controller or computer in many forms including, but not limited to, information permanently stored on non-writable storage media such as ROM devices and information alterably stored on writeable storage media such as floppy disks, magnetic tapes, CDs, RAM devices, and other magnetic and optical media. The processes, methods, or algorithms can also be implemented in a software executable object. Alternatively, the processes, methods, or algorithms can be embodied in whole or in part using suitable hardware components, such as Application Specific Integrated Circuits (ASICs), Field-Programmable Gate Arrays (FPGAs), state machines, controllers or other hardware components or devices, or a combination of hardware, software and firmware components.

While exemplary embodiments are described above, it is not intended that these embodiments describe all possible forms encompassed by the claims. The words used in the specification are words of description rather than limitation, and it is understood that various changes can be made without departing from the spirit and scope of the disclosure. As previously described, the features of various embodiments can be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes can include, but are not limited to cost, strength, durability, life cycle cost, marketability, appearance, packaging, size, serviceability, weight, manufacturability, ease of assembly, etc. As such, to the extent any embodiments are described as less desirable than other embodiments or prior art implementations with respect to one or more characteristics, these embodiments are not outside the scope of the disclosure and can be desirable for particular applications.

## Claims

1. An electro-hydraulic brake system for use in a vehicle, the electro-hydraulic brake system comprising:
a master cylinder (45),
a boost unit (66),
one or more friction brakes (96) configured to brake one or more wheels (17, 19, 21, 23) of the vehicle;
a first electronic parking brake (62);
a second electronic parking brake (64);
a primary controller (52) in communication with the one or more friction brakes (96) to control dynamic braking; and at least one of said parking brakes (62, 64);
a secondary controller in communication with the first electronic parking brake (62) and the second electronic parking brake (64);
wherein the secondary controller is configured to control said first and second electronic parking brakes (62, 64) regardless of the primary controller (52) operation status,
said primary controller (52) is configured to control electro-hydraulic braking including said boost unit (66) and said master cylinder (45) and be responsive when said secondary controller fails to control one or both of said first and
second electronic parking brakes (62, 64),
said secondary controller being configured to control said dynamic braking and
said first and second electronic parking brakes (62, 64) in the event the primary controller (52) fails.

2. The electro-hydraulic brake system of claim 1, further comprising:
a brake pedal (36); and
a brake pedal sensor configured to sense driver input from a driver of the vehicle to the brake pedal (36), wherein the secondary controller is further configured to command the at least one of the first electronic parking brake (62) and the second electronic parking brake (64) based on signals from the brake pedal sensor, wherein the signals are indicative of the driver input.

3. The electro-hydraulic brake system of claim 2, further comprising:
a park switch configured to communicate a parking brake command from the driver, wherein the primary controller (52) is configured to, responsive to (i) the brake pedal (36) malfunctioning, (ii) receiving the parking brake command from the park switch, and (iii) dynamic movement of the one or more wheels (17, 19, 21, 23) of the vehicle, command the one or more friction brakes (96) to provide controlled deceleration of the vehicle, in particular wherein the park switch is configured to communicate the parking brake command from the driver to the secondary controller.

4. The electro-hydraulic brake system of any one of claims 1 to 3, further comprising:
a context switch (56) configured to receive a context switch control signal (76) from the primary controller (52), wherein the context switch control signal (76) is indicative of the primary controller (52) malfunctioning, and wherein the context switch (56) is further configured to provide a switch fault signal to the secondary controller in response to receiving the context switch control signal (76).

5. The electro-hydraulic brake system of claim 4, further comprising:
a brake pedal (36); and
a brake pedal sensor configured to sense driver input to the brake pedal (36), wherein the context switch (56) is further configured to provide a motor control signal received from the secondary controller to the at least one of the first electronic parking brake (62) and the second electronic parking brake (64) based on the driver input received from the brake pedal sensor.

6. The electro-hydraulic brake system of claim 1,
wherein the boost unit (66) is configured to supply a desired brake pressure to the one or more friction brakes (96),
wherein the primary controller (52) is in communication with the boost unit (66), and
wherein the secondary controller is configured to, responsive to the boost unit (66) failing to provide the desired brake pressure and dynamic movement of the one or more wheels (17, 19, 21, 23) of the vehicle, command at least one of the first electronic parking brake (62) and the second electronic parking brake (64) to dynamically brake the one or more wheels (17, 19, 21, 23).

7. The electro-hydraulic brake system of claim 6, further comprising:
one or more hydraulic circuits fluidly connected between the boost unit (66) and the one or more friction brakes (96), wherein the secondary controller is further configured to, responsive to the one or more hydraulic circuits malfunctioning, command said first electronic parking brake (62) and said second electronic parking brake (64) to dynamically brake the one or more wheels (17, 19, 21, 23).

8. The electro-hydraulic brake system of claim 6 or 7, further comprising:
one or more wheel speed sensors configured to measure a speed of each of the one or more wheels (17, 19, 21, 23); and
a first adaptation and signal copy unit configured to receive the measured speed and provide wheel-speed signals indicative of the measured speed to the primary controller (52) and the secondary controller,
in particular wherein as the wheel-speed signals are provided to the primary controller (52) the wheel-speed signals are provided to the secondary controller.

9. The electro-hydraulic brake system of claim 8, further comprising:
a brake pedal (36);
a brake pedal sensor configured to sense driver input to the brake pedal (36); and
a second adaptation and signal copy unit configured to receive pedal-sensor signals from the brake pedal sensor and provide the same to the primary controller (52).

10. The electro-hydraulic brake system of claim 9, wherein the second adaptation and signal copy unit is further configured to provide the pedal-sensor signals to the secondary controller in response to dynamic movement of the one or more wheels (17, 19, 21, 23) of the vehicle and at least one of (i) the primary controller (52) malfunctioning and (ii) the boost unit (66) failing to provide the desired brake pressure.

11. The electro-hydraulic brake system of claim 9 or 10, further comprising:
a brake pedal pressure sensor (15) coupled to the brake pedal (36) and configured to measure pressure based on the driver input to the brake pedal (36), wherein the brake pedal sensor is a pedal travel sensor configured to measure displacement of the brake pedal (36) based on the driver input, wherein the brake pedal pressure sensor (15) is configured to directly communicate the measured pressure to the primary controller (52).

12. The electro-hydraulic brake system of any one of claims 6 to 11, further comprising:
a logic gate (42) electrically connected to a first power supply line and a second power supply line, wherein the logic gate (42) is configured to provide voltage to the primary controller (52) and the secondary controller from either the first power supply line or the second power supply line.

13. The electro-hydraulic brake system of any one of claims 6 to 12, wherein the primary controller (52) is further configured to, responsive to: (i) the boost unit (66) failing to provide the desired brake pressure, (ii) dynamic movement of the one or more wheels (17, 19, 21, 23) of the vehicle, and (iii) the secondary controller malfunctioning, operate at said first electronic parking brake (62) and said second electronic parking brake (64) to dynamically brake the one or more wheels (17, 19, 21, 23),
in particular wherein the electro-hydraulic brake system further comprises: a context switch (56) configured to, responsive to receiving a backup motor control signal from the primary controller (52), operate the at least one of the first electronic parking brake (62) and the second electronic parking brake (64) to dynamically brake the one or more wheels (17, 19, 21, 23).

14. The electro-hydraulic brake system of claim 1,
wherein the primary controller (52) is configured to operate one or more friction brakes (96) of the vehicle; and
wherein the secondary controller is configured to operate said first and second electronic parking brakes (62, 64), wherein the primary controller (52) is further configured to, responsive to a speed of the vehicle being less than a speed threshold and at least one of: (i) the secondary controller malfunctioning and (ii) an electronic parking brake line malfunctioning, operate said electronic parking brakes (62, 64).

15. The electro-hydraulic brake system of claim 14, further comprising:
a context switch (56) configured to receive a backup motor control signal from the primary controller (52) in response to the primary controller (52) receiving an error signal from the secondary controller, the error signal indicative of the at least one of: (i) the secondary controller malfunctioning and (ii) an electronic parking brake line malfunctioning; and/or
wherein the primary controller (52) is further configured to operate the first electronic parking brake (62) and the second electronic parking brake (64), or only one of the first electronic parking brake (62) and the second electronic parking brake (64).
